# EUROPEAN PATENT SPECIFICATION

(11) **EP 2 189 222 B1**
(45) Date of publication and mention of the grant of the patent: **09.01.2019**
(21) Application number: 09176610.5
(22) Date of filing: 20.11.2009
(51) Int. Cl.: B02C 18/24, B02C 25/00

(54) **Comminuting apparatus with an automatic control device of the coupling unit**
Zerkleinerungsvorrichtung mit einer automatischen Steuerung des Kupplungselementes
Broyeur avec commande automatique du dispositif de transmission

(30) Priority: 21.11.2008 DK 200801640
(43) Date of publication of application: 26.05.2010
(73) Proprietor: Linddana A/S, 7160 Torring (DK)
(72) Inventor: Petersen, Poul Erik, 7100 Vejle (DK)
(74) Representative: Gregersen, Niels Henrik

(56) References cited:
- EP-A1- 1 552 188
- WO-A1-2008/140951
- DE-A1- 4 400 297
- US-A1- 2006 276 284

## Description

### Field of the Invention

The present invention concerns an apparatus for comminuting biological material, such as a wood chipper, a branch crusher or a comminuting device, where the apparatus includes a drive unit, e.g. a diesel engine, and a rotor, and a coupling unit for transmitting revolutions from the drive unit to the rotor, where the coupling unit is a belt coupling, where the belt coupling is provided with at least one belt, a motor drive wheel, a rotor drive wheel and a tension pulley adapted for rotation about a movable shaft, where the drive unit is provided with a control unit, e.g. a throttle cable, for adjusting the rotational speed of the drive unit.

### Background of the Invention

By wood chippers and similar apparatuses for comminuting biological material, frequently a number of rotating knives or beaters are used mounted on a rotor unit in the form of a rotor disc, or connected in other ways to a rotor shaft which during use of the rotor is driven with a relatively constant rotary speed.

The rotor may e.g. be driven directly by a diesel engine or via the power take-off on a tractor.

When driving the rotor by a drive unit such as a diesel motor, it is necessary to start the drive unit and let it run idle until the drive unit is loaded in connection with driving the rotor. This is done for protecting the drive unit and the starter unit, as a rotor for such apparatuses is often a unit with a large moment of inertia in order to ensure that non-uniform biological material will not cause large fluctuation in the rotational speed of the rotor, and consequently uneven comminution of the biological material.

After a relatively short time with the drive unit running idle, the rotor is to be coupled on. For this operation a centrifugal clutch, or "sling coupling", is usually applied.

The centrifugal clutch can be mounted on the output shaft of the engine, after which the centrifugal clutch via a belt drive transmits the power to the rotor shaft. The rotational speed of the engine is typically three to four times greater than the rotational speed of the rotor.

The centrifugal clutch operates by means of a number of sling blocks with a friction face and which are held against the rotary centre of the centrifugal clutch by means of springs. When the rotational speed of the engine reaches a certain level, the centrifugal force will exceed the spring force, whereby the sling blocks are moved to a position where the friction faces of the sling blocks obtain sufficiently large friction against a corresponding friction face on a coupling member connected to the rotor. The coupling action occurs in this way, after which the power of the engine is transmitted to the rotor.

By every coupling action by the centrifugal clutch, a little wear on the friction faces will take place by normal operation of the centrifugal clutch, why the coupling action with time will take place imprecisely and finally cause damage to the centrifugal clutch.

However, there is also a relatively great risk of wrong operation of the centrifugal clutch as the rotational speed is to be increased immediately after coupling engagement so that the friction faces of the sling blocks and the corresponding friction face will attain so much friction that the friction faces will not be destroyed due to too small friction force between the friction faces causing the sling blocks and corresponding coupling member to move in relation to each other, thereby wearing the friction faces. Since the rotational speed by the prior art apparatuses is controlled manually, an inexperienced person may easily come to operate the apparatus wrongly and relatively quickly destroy the centrifugal clutch.

Another well-known coupling method is by a belt coupling. By a belt coupling, a motor drive wheel is disposed on the power take-off shaft of the drive unit, and a rotor drive wheel is correspondingly connected with the rotor shaft. In the engaged position under operation, the power of the motor drive wheel will be transmitted to the rotor drive wheel by means of a belt. Coupling action is effected by means of a movable tension pulley. By start of motor and subsequent idling, the belts will be slack and the power transmission therefore cannot occur. Coupling action is effected in that the tension pulley is moved against the at least one belt, e.g. at the inner side of the belts, thus tightening the latter and thereby ensuring that the belts run tightly against both drive wheels. The belts are often of the V-belt type but may also have other designs.

The moving of the tension pulley is most frequently effected manually by moving the shaft of the tension pulley between the two positions. With time the belts become more slack as the well-known elastic materials used for making belts are plastically deformed with time, as well as wear of the belts will take place.

By using a belt coupling it is also of great necessity that the rotational speed is only increased immediately after coupling taking place, in order that the belts are not worn too much.

Such a belt coupling is known from US 6,478,701 where a belt is tightened by means of an actuator and where the speed in monitored by two speed sensors which are placed partly at a belt pulley where an expression of the speed of the drive unit itself is determined, and partly at a variable belt wheel connected directly to the driven apparatus. The ratio between the speed of the drive unit and the speed of the apparatus may thereby be regulated.

However, such a mechanism is more suited for regulating speed than for use in connection with coupling engagement of an apparatus having a great moment of inertia, and it is thus not suited for use in a comminuting apparatus according to the invention. Such speed sensors may furthermore tend to be destroyed in an exposed environment.

Compared with the centrifugal clutch, the belt coupling has the advantage that it is easy to be informed about the condition of the belt coupling by simple visual inspection, since there may be a free view to all parts of the belt coupling, while a centrifugal clutch will be enclosed in a housing protecting the friction faces and the springs. Another example of an apparatus for comminuting biological material with a drive unit and a coupling belt unit according to the preamble of claim 1 is disclosed in document WO 2008/140951 A1.

### Object of the Invention

The purpose of this invention is to indicate an apparatus and a method which can provide a coupling engagement which is safeguarded against the above inexpedient operation by the prior art coupling methods.

### Description of the Invention

According to the present invention, this object is achieved by an apparatus of the kind mentioned in the introduction, which is peculiar in that the shaft of the tension pulley is connected with the control unit of the drive unit.

There is thus disclosed in the introduction an apparatus for comminuting biological material, such as a wood chipper, a branch crusher or a comminuting device. However, the case may also be comminution of any other material, or possibly material only partially containing biological material. This could be mineral-containing materials, e.g. plastic, rubbish, cement-containing materials, composites, glass and metals.

The apparatus includes a drive unit which for this type of apparatuses will be a diesel engine or the power take-off on a tractor. The power of the drive unit may, however, of course also come from other prior art types of motors, such as electric, hydraulic, pneumatic or hot air motors, or combustion engines. The drive unit is frequently provided with a control unit for adjusting the rotational speed of the drive unit. The control unit may assume various forms. On relatively uncomplicated engines, such as diesel engines, the adjusting may occur by a throttle cable which in principle is a wire. By pulling the wire there is pulled in a unit which by this action doses more combustion material to the combustion chamber of the diesel engine. The rotational speed of the engine is thereby increased, and similarly the rotational speed is reduced when the wire is slackened.

Moreover, the apparatus includes a rotor. This rotor may include any kind of rotor unit mounted on a rotor shaft. By this type of apparatus, the rotor unit is often provided with a relatively large moment of inertia, and the rotor unit can be mounted with projecting wearing parts, such as chains, wire, cutter blades or similar.

By letting the shaft of the tension pulley in the belt coupling be connected with the control unit of the drive unit, it is possible to increase the rotational speed of the drive unit concurrently with the operator activating the belt coupling by moving the tension pulley to a position where the at least one belt is sufficiently tight so that power transmission between motor drive wheel and rotor drive wheel may occur. In that way is ensured optimal coupling engagement with a minimum of wear on the at least one belt.

In a further embodiment, the shaft of the tension pulley furthermore may furthermore be connected with an actuator arm on an actuator.

The actuator may be any kind of unit which is capable of elevating, lowering, adjusting, regulating, pushing or pulling parts of an object. It may e.g. be a rotary actuator or a linear actuator, and the actuator may be driven electrically, hydraulically or pneumatically. By an actuator arm is meant the part of the actuator which is moved relative to the other part of the actuator.

By using an actuator in the said way, there is enabled automatic coupling engagement, where by start/stop operation of the actuator, both coupling action and the above drive unit regulation are operated. Since the movement of the tension pulley shaft and consequent coupling action speed are known hereby, it is possible to preset an optimal drive unit regulation with the least possible wear on the components.

By a preferred variant of the invention, the actuator may be provided with a current limitation.

Current limitation causes the movement of the actuator to stop when the actuator arm of the actuator encounters resistance of a predetermined size. In this case, the tension of the at least one belt will constitute the resistance which via the current limitation device brings the actuator to stop at a given position. The belt tension will thus be the same each time the belt coupling is used. As the belts, as mentioned, will be extended plastically as well as worn, the automatic current limitation provides for the tension pulley to travel to the position required for the desired belt tension. The outermost position of the tension pulley will thereby be automatically adjusted, and manual periodic inspection and adjustment of the extreme position of the tension pulley is considerably reduced or made superfluous, as well as optimal operation of the belt coupling is ensured with a minimum of wear on the at least one belt.

In a particular embodiment, the control unit of the drive unit may be a throttle cable which at one end part is fixed to a guide fitting, where the guide fitting is connected with the shaft of the tension pulley.

Hereby is achieved a well-known and simple way of controlling the drive unit, such as diesel engine, while at the same time the said guide fitting enables adapting the geometric design of the travel of the shaft of the tension pulley such that the latter fits better to the desired travel of the throttle cable, whereby optimal regulation of the drive unit in relation to the coupling engagement of the belt coupling can be preset.

In a further particular embodiment, the shaft of the tension pulley may furthermore be connected with an actuator arm on an actuator via the same guide fitting.

In a similarly simple way is thus achieved that the geometric design of the travel of the tension pulley shaft and the desired travel of the throttle cable can be adapted to the geometric travel of the end of the extension arm of the actuator. Hereby is provided possibility of presetting the optimal regulation of the engine in relation to coupling action of the belt coupling while at the same time the coupling action is effected automatically such that faulty operation is avoided.

In a particular variant of the invention, the end part of the throttle cable may be connected with the shaft of the tension pulley via a spring.

By this is achieved that the change in the belt tension over time due to plastic deformation and/or wear of the at least one belt will not entail increased rotational speed for the drive unit at the engaged position, as the spring absorbs the change occurring in the position of the guide fitting.

In a further embodiment and method, the spring may be fastened to the guide fitting and the end part of the throttle cable, respectively, and be disposed at an angle relative to the extension of the end part of the throttle cable. The method may hereby further include at least one of the following steps:
- the guide fitting acts on a spring for turning, where the spring is fastened to the end part of a throttle cable;
- the spring, which is fastened to the end part of a throttle cable, is turned to a position where the fixing points of the spring are substantially aligned in extension of the end part of the throttle cable.

Hereby is achieved that the spring goes through two activation steps. By the first activation step, the spring is turned until the fixing points of the spring is aligned in extension of the end part of the throttle cable such that the next activation step occurs in that a tensile force then may be transmitted via the spring for the throttle cable. By this embodiment, the time for increasing the rotational speed of the engine is postponed until a certain belt tension has been attained and the consequent coupling action has taken place. It may be of great advantage to the possibility of overcoming the moment of inertia of the rotor in a suitable pace.

This two-step activation of the spring may occur in many other ways. The spring may e.g. consist of two resilient parts with each their spring force such that the most loose spring (with smallest spring force) is extended before the throttle cable is actuated, and the most tight spring (with the greatest spring force) transmits the tensile force to the throttle cable and is only substantially extended when the throttle cable is pulled as far as it will go.

It may also be designed such that the end of the spring opposite the fastening for the end of the throttle cable is loosely positioned and fitted with a retainer that may engage a corresponding part for the retainer. The retainer may e.g. be a block or a disc which is larger than a hole in a flange which may be defined as the corresponding part of the retainer. The first activation step will move the block or the disc against the hole in the flange, whereby the retainer is stopped and the second activation step occurs in that the force is transmitted to the spring and thereby to the throttle cable.

By a further variant of the invention, the guide fitting can be rotatably fastened to a guide fitting journal.

Hereby is achieved that the guide fitting is provided a point of rotation which is offset relative to the shaft of the tension pulley. This provides a more stable design of the guide fitting and thereby greater certainty of a uniform and stable function over a period of time. The guide fitting may be designed as a V and possibly work according to the lever arm principle.

According to the present invention, the object of the invention is further achieved by a method of using an apparatus of the type mentioned in the introduction, which is peculiar in that the method at least includes the following steps:
- the drive unit is started to run idle;
- engagement of the rotor is initiated by activating a actuator;
- the actuator arm actuates a guide fitting;
- the guide fitting rotates about a guide fitting journal;
- the guide fitting displaces the shaft of the tension pulley against the at least one belt;
- the actuator arm of the actuator is moved to an extreme position determined by a current limiter communicating with the actuator, as the belt tension of the at least one belt via the guide fitting provides resistance to further movement of the actuator arm.

The automatic coupling action described hereby of the rotor of a wood chipper or other apparatus for comminuting biological material ensures that the coupling action is effected without risk of inadvertent faulty operation by an inexperienced person. At the same time, stable operation is ensured which can be present from the factory to a coupling action and a belt tensioning which are optimal by experience. This will ensure long service life and minimal maintenance of the apparatus.

In order to further protect the apparatus against inadvertent maloperation, the apparatus may be provided with a relay ensuring that the drive unit cannot be started if the belt coupling is activated and the belts tensioned thereby.

### Description of the Drawing

The invention will be explained below with reference to the accompanying drawing, wherein:
Fig. 1 shows a detail of an apparatus according to the invention; and
Fig. 2 is a function curve for operation of an engine and a rotor by the method according to the invention.

### Detailed Description of the Invention

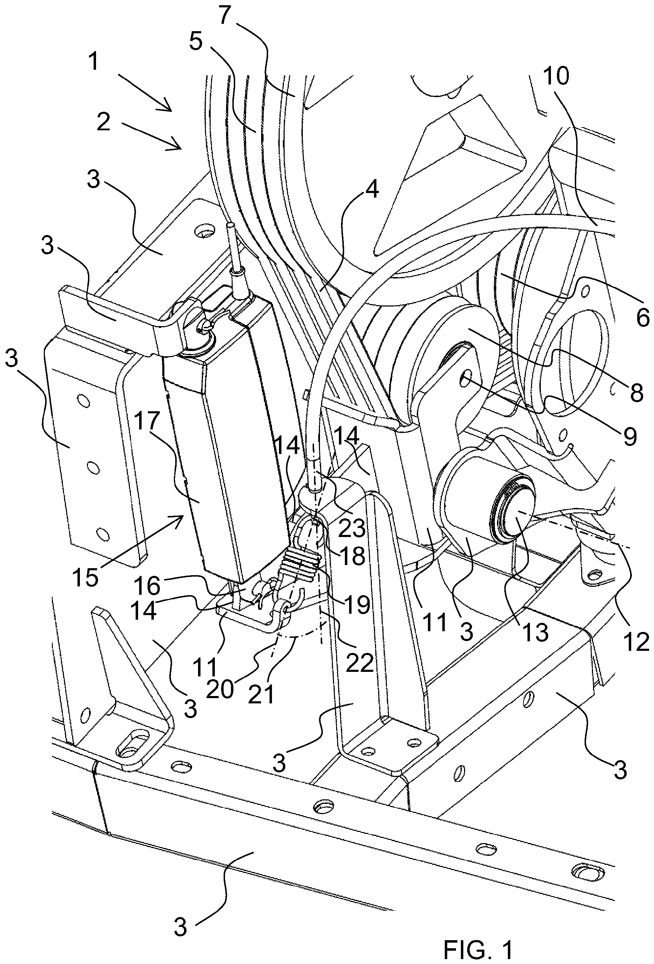

Fig. 1 shows part of the belt coupling 2 of an apparatus 1 which is fastened to a framework 3. The belt coupling 2 is provided with a V-belt 4 with four grooves 5. Furthermore is seen a motor drive wheel 6, a rotor drive wheel 7 and a tension pulley 8. The tension pulley 8 may rotate about a movable shaft 9.

The drive unit (not shown) is provided with a control unit in the form of a throttle cable 10 for adjusting the rotational speed of the drive unit.

The shaft 9 of the tension pulley 8 is connected with the throttle cable 10 via a V-shaped guide fitting 11. The guide fitting 11 has an axis of rotation 12 which is offset from the shaft 9 of the tension pulley 8 by means of a guide fitting journal 13 which is rotatably fastened to the framework 3 of the apparatus 1. The V-shaped guide fitting 11 is designed with a reinforcement 14 to which is fastened an actuator arm 16 of a linear actuator 15. The other part 17 of the actuator 15 is fastened to the framework 3.

The end part 18 of the throttle cable 10 is connected to the shaft 9 of the tension pulley 8 via a spring 19.

The spring 19 is fastened to the end part 18 of the guide fitting 11 and the throttle cable 10, respectively, and is disposed at an angle 21 in relation to the extension 22 of the end part 18 of the throttle cable 10.

The throttle cable 10 is provided with a protective sleeve 23 close to the end part 18 of the throttle cable 10, where the protective sleeve 23 is fastened to a part of the framework 3.

The shaft (not shown) of the rotor drive wheel 7 may be an immediate extension of the rotor shaft of the rotor (not shown). Also, the shaft of the motor drive wheel 6 may be an immediate extension of the power take-off shaft of the drive unit.

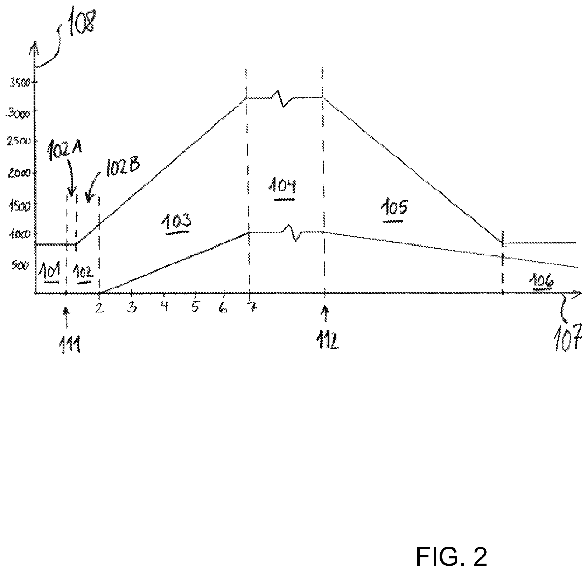

In Fig. 2 is seen a diagram 100 of the phases 101-106 which the apparatus 1 shown on Fig. 1 goes through during operation. The horizontal axis 107 of the diagram 100 shows time in seconds and the vertical axis 108 of the diagram shows the rotational speed of the drive unit. The two graphs 109-110 show the rotational speed in relation to time for rotor and drive unit, respectively, as graph 109 is for rotor and graph 110 is for drive unit.

Phase 101: the drive unit is started to run idle.

Phase 102A: engagement of the rotor is initiated by activating actuator 15 by an initial impulse 111. The actuator arm 16 of the actuator 15 pushes the guide fitting 11, whereby the guide fitting 11 rotates about a guide fitting journal 13 and displaces the shaft 9 of the tension pulley 8 closer to the internal side of the belt 4 while at the same time the first activation step of the spring 19 occurs in that the spring 19 is turned to a position where the angle 21 is small.

Phase 102B: The second activation step of the spring 19 proceeds and the tensile force from the actuator 15 is now transmitted to the throttle cable 10 which increases the rotational speed of the drive unit. The belt 4 is not yet tight enough as to transmit the power from the drive unit to the rotor drive wheel 7.

Phase 103: The belts 4 are now tight enough as to transmit the power from the drive unit to the rotor drive wheel 7. The rotational speed of the drive unit (see graph 109) is now somewhat higher than that of idling, and is increased by a factor 3 compared with the increase of the rotational speed of the rotor (see graph 110). In this phase, the actuator arm 16 of the actuator 15 is moved to an extreme position determined by a current limitation device communicating with the actuator 15, as the belt tension of the belt via the guide fitting 11 provides resistance against further movement of the actuator arm 16.

Phase 104: The apparatus 1 is now ready to be used for comminuting biological material for a desired period of time as the rotor is now in full coupling engagement via the belt coupling 2 which transmits the power from the drive unit to the rotor.

Phase 105: The apparatus 1 is deactivated by providing a closing impulse 112 to the actuator, e.g. by pressing a button on a remote control which may be permanently or movably mounted at a suitable place on the apparatus 1. The signal makes the actuator 15 retract the actuator arm 16, whereby the guide fitting 11 is moved back to the initial position, whereby the tension pulley 8 is moved away from the belt 4 for disengaging the rotor and the throttle cable 10 is slackened for reducing the rotational speed of the drive unit to idling. The moment of inertia of the rotor implies that its rotational speed drops relatively slower than the rotational speed of the drive unit.

Phase 106: The drive unit runs idle, and the rotational speed of the rotor is slowly reduced to zero due to the moment of inertia of the rotor.

## Claims

1. An apparatus (1) for comminuting biological material, such as a wood chipper, a branch crusher or a comminuting device, where the apparatus includes a drive unit, e.g. a diesel engine, and a rotor, and a coupling unit for transmitting revolutions from the drive unit to the rotor, where the coupling unit is a belt coupling (2), where the belt coupling (2) is provided with at least one belt (4), a motor drive wheel (6), a rotor drive wheel (7) and a tension pulley (8) adapted for rotation about a movable shaft (9), where the drive unit is provided with a control unit, e.g. a throttle cable (10), for adjusting the rotational speed of the drive unit, **characterised in that** the shaft (9) of the tension pulley is connected with the control unit of the drive unit.

2. Apparatus according to claim 1, **characterised in** the shaft of the tension pulley furthermore is connected with an actuator arm (16) on an actuator (15).

3. Apparatus according to claim 2, **characterised in that** the actuator (15) is provided with current limitation.

4. Apparatus according to any of claims 1-3, **characterised in** the control unit of the drive unit is a throttle cable (10) which at one end part is fixed to a guide fitting (11), and that the guide fitting (11) is connected with the shaft (13) of the tension pulley.

5. Apparatus according to claim 4, **characterised in** the shaft (13) of the tension pulley furthermore is connected with the actuator arm (16) on an actuator (15) via the same guide fitting (11).

6. Apparatus according to any of claims 4-5, **characterised in that** the end part (18) of the throttle cable (10) is connected with the shaft (9) of the tension pulley (8) via a spring (19).

7. Apparatus according to claim 6, **characterised in that** the spring (19) is fastened to the end part (18) of the guide fitting (11) and the throttle cable (19), respectively, and is disposed at an angle (21) in relation to the extension of the end part (18) of the throttle cable (10).

8. Apparatus according to any of claims 4-7, **characterised in that** the guide fitting (11) is rotatably fastened to a guide fitting journal (13).

9. A method of using an apparatus (1) for comminuting biological material, such as a wood chipper, a branch crusher or a comminuting device, where the apparatus includes a drive unit, e.g. a diesel engine, and a rotor, and a coupling unit for transmitting revolutions from the drive unit to the rotor, where the coupling unit is a belt coupling (2), where the belt coupling (2) is provided with at least one belt (4), a motor drive wheel (6), a rotor drive wheel (7) and a tension pulley (8) adapted for rotation about a movable shaft (9), where the drive unit is provided with a control unit, e.g. a throttle cable (10), for adjusting the rotational speed of the drive unit, **characterised in that** the method includes at least the following steps:
- the drive unit is started to run idle;
- engagement of the rotor is initiated by activating a actuator (15);
- the actuator arm (16) actuates a guide fitting (11);
- the guide fitting (11) rotates about a guide fitting journal (13);
- the guide fitting (11) displaces the shaft (9) of the tension pulley (8) against the at least one belt (4);
- the actuator arm (16) of the actuator (15) is moved to an extreme position determined by a current limiter that communicates with the actuator (15), as the belt tension of the at least one belt (4) via the guide fitting (11) provides resistance to further movement of the actuator arm (16).

10. Method according to claim 9, **characterised in that** the method further includes at least one of the following steps:
- the guide fitting (11) acts on a spring (19) for turning, where the spring (19) is fastened to the end part (18) of a throttle cable (10);
- the spring, which is fastened to the end part (18) of a throttle cable (10), is turned to a position where the fixing points of the spring (19) are substantially aligned in extension of the end part (18) of the throttle cable (10).

## Patentansprüche

1. Vorrichtung (1) zum Zerkleinern von biologischem Material, beispielsweise ein Häcksler, ein Astschneider oder eine Zerkleinerungseinrichtung, wobei die Vorrichtung eine Antriebseinheit, z. B. einen Dieselmotor, und einen Rotor und eine Kupplungseinheit zum Übertragen von Umdrehungen von der Antriebseinheit an den Rotor einschließt, wobei die Kupplungseinheit eine Gurtkupplung (2) ist, wobei die Gurtkupplung (2) mit wenigstens einem Gurt (4), einem stirnseitigen Treibrad (6), einem Rotortreibrad (7) und einer Riemenscheibe (8), die für eine Rotation um eine bewegliche Welle (9) angepasst ist, bereitgestellt ist, wobei die Antriebseinheit mit einer Steuereinheit, z. B. einem Gaszug (10), zum Angleichen der Rotationsgeschwindigkeit der Antriebseinheit bereitgestellt ist, **dadurch gekennzeichnet, dass** die Welle (9) der Riemenscheibe mit der Steuereinheit der Antriebseinheit verbunden ist.

2. Vorrichtung nach Anspruch 1, **dadurch gekennzeichnet, dass** die Welle der Riemenscheibe ferner mit einem Stellarm (16) an einem Stellglied (15) verbunden ist.

3. Vorrichtung nach Anspruch 2, **dadurch gekennzeichnet, dass** das Stellglied (15) mit einer Strombegrenzung bereitgestellt ist.

4. Vorrichtung nach einem der Ansprüche 1-3, **dadurch gekennzeichnet, dass** die Steuereinheit der Antriebseinheit ein Gaszug (10) ist, der an einem Endteil an einem Umlenkbeschlag (11) befestigt ist, und dadurch, dass der Umlenkbeschlag (11) mit der Welle (13) der Riemenscheibe verbunden ist.

5. Vorrichtung nach Anspruch 4, **dadurch gekennzeichnet, dass** die Welle (13) der Riemenscheibe ferner über denselben Umlenkbeschlag (11) mit dem Stellarm (16) an dem Stellglied (15) verbunden ist.

6. Vorrichtung nach einem der Ansprüche 4-5, **dadurch gekennzeichnet, dass** das Endteil (18) des Gaszugs (10) über eine Feder (19) mit der Welle (9) der Riemenscheibe (8) verbunden ist.

7. Vorrichtung nach Anspruch 6, **dadurch gekennzeichnet, dass** die Feder (19) jeweils an dem Endteil (18) des Umlenkbeschlags (11) und dem Gaszug (19) angebracht ist und in einem Winkel (21) in Bezug auf die Erstreckung des Endteils (18) des Gaszugs (10) angeordnet ist.

8. Vorrichtung nach einem der Ansprüche 4-7, **dadurch gekennzeichnet, dass** der Umlenkbeschlag (11) drehbar an einem Umlenkbeschlag-Gleitlagersitz (13) angebracht ist.

9. Verfahren zur Verwendung einer Vorrichtung (1) zum Zerkleinern von biologischem Material, beispielsweise einem Häcksler, einem Astschneider oder einer Zerkleinerungseinrichtung, wobei die Vorrichtung eine Antriebseinheit, z. B. einen Dieselmotor, und einen Rotor und eine Kupplungseinheit zum Übertragen von Umdrehungen von der Antriebseinheit an den Rotor einschließt, wobei die Kupplungseinheit eine Gurtkupplung (2) ist, wobei die Gurtkupplung (2) mit wenigstens einem Gurt (4), einem stirnseitigen Treibrad (6), einem Rotortreibrad (7) und einer Riemenscheibe (8), die für eine Rotation um eine bewegliche Welle (9) angepasst ist, bereitgestellt ist, wobei die Antriebseinheit mit einer Steuereinheit, z. B. einem Gaszug (10), zum Angleichen der Rotationsgeschwindigkeit der Antriebseinheit bereitgestellt ist,
**dadurch gekennzeichnet, dass** das Verfahren wenigstens die folgenden Schritte einschließt:
- die Antriebseinheit wird gestartet, um leerzulaufen;
- Ineingriffbringen des Rotors wird durch das Aktivieren des Stellglieds (15) initialisiert;
- der Stellarm (16) betätigt einen Umlenkbeschlag (11) ;
- der Umlenkbeschlag (11) rotiert um einen Umlenkbeschlag-Gleitlagersitz (13);
- der Umlenkbeschlag (11) verschiebt die Welle (9) der Riemenscheibe (8) gegen den wenigstens einen Gurt (4);
- der Stellarm (16) des Stellglieds (15) wird in eine äußerste Position bewegt, die durch einen Strombegrenzer bestimmt wird, der mit dem Stellglied (15) kommuniziert, während die Gurtspannung des wenigstens einen Gurts (4) über den Umlenkbeschlag (11) einen Widerstand gegen eine weitere Bewegung des Stellarms (16) bereitstellt.

10. Verfahren nach Anspruch 9, **dadurch gekennzeichnet, dass** das Verfahren ferner wenigstens einen der folgenden Schritte einschließt:
- der Umlenkbeschlag (11) wirkt auf eine Feder (19) zum Drehen, wobei die Feder (19) an einem Endteil (18) des Gaszugs (10) angebracht ist;
- die Feder, die an dem Endteil (18) des Gaszugs (10) angebracht ist, wird in eine Position gedreht, in der die Befestigungspunkte der Feder (19) im Wesentlichen in einer Erstreckungsrichtung des Endteils (18) des Gaszugs (10) ausgerichtet sind.

## Revendications

1. Appareil (1) pour broyer du matériau biologique, tel qu'une déchiqueteuse de bois, un broyeur de branches ou un dispositif de broyage, l'appareil comprenant une unité d'entraînement, par exemple un moteur diesel et un rotor, et une unité d'accouplement pour transmettre des tours de l'unité d'entraînement au rotor, dans lequel l'unité d'accouplement est un accouplement de courroie (2), dans lequel l'accouplement de courroie (2) est pourvu d'au moins une courroie (4), une roue motrice d'entraînement (6), une roue d'entraînement de rotor (7) et une poulie de tension (8) adaptée(s) pour tourner autour d'un arbre mobile (9), dans lequel l'unité d'entraînement est pourvue d'une unité de commande, par exemple d'un câble d'accélérateur (10), pour régler la vitesse de rotation de l'unité d'entraînement, **caractérisé en ce que** l'arbre (9) de la poulie de tension est relié à l'unité de commande de l'unité d'entraînement.

2. Appareil selon la revendication 1, **caractérisé en ce que** l'arbre de la poulie de tension est en outre relié à un bras d'actionnement (16) sur un actionneur (15).

3. Appareil selon la revendication 2, **caractérisé en ce que** l'actionneur (15) est pourvu d'une limitation de courant.

4. Appareil selon l'une quelconque des revendications 1 à 3, **caractérisé en ce que** l'unité de commande de l'unité d'entraînement est un câble d'accélérateur (10) qui, au niveau d'une partie d'extrémité, est fixé à un raccord de guidage (11), et **en ce que** le raccord de guidage (11) est relié à l'arbre (13) de la poulie de tension.

5. Appareil selon la revendication 4, **caractérisé en ce que** l'arbre (13) de la poulie de tension est en outre relié au bras d'actionnement (16) sur un actionneur (15) par l'intermédiaire du même raccord de guidage (11).

6. Appareil selon l'une quelconque des revendications 4 à 5, **caractérisé en ce que** la partie d'extrémité (18) du câble d'accélérateur (10) est reliée à l'arbre (9) de la poulie de tension (8) par l'intermédiaire d'un ressort (19).

7. Appareil selon la revendication 6, **caractérisé en ce que** le ressort (19) est fixé à la partie d'extrémité (18) du raccord de guidage (11) et du câble d'accélérateur (19), respectivement, et est disposé au niveau d'un angle (21) par rapport au prolongement de la partie d'extrémité (18) du câble d'accélérateur (10).

8. Appareil selon l'une quelconque des revendications 4 à 7, **caractérisé en ce que** le raccord de guidage (11) est fixé de manière rotative à un tourillon de raccord de guidage (13).

9. Procédé d'utilisation d'un appareil (1) pour broyer du matériau biologique, tel qu'une déchiqueteuse de bois, un broyeur de branches ou un dispositif de broyage, l'appareil comprenant une unité d'entraînement, par exemple un moteur diesel et un rotor, et une unité d'accouplement pour transmettre des tours de l'unité d'entraînement au rotor, dans lequel l'unité d'accouplement est un accouplement de courroie (2), dans lequel l'accouplement de courroie (2) est pourvu d'au moins une courroie (4), une roue motrice d'entraînement (6), une roue d'entraînement de rotor (7) et une poulie de tension (8) adaptée(s) pour tourner autour d'un arbre mobile (9), dans lequel l'unité d'entraînement est pourvue d'une unité de commande, par exemple d'un câble d'accélérateur (10), pour régler la vitesse de rotation de l'unité d'entraînement, **caractérisé en ce que** le procédé comprend au moins les étapes suivantes :
- l'unité d'entraînement commence à tourner au ralenti ;
- l'engagement du rotor est initié par l'activation d'un actionneur (15) ;
- le bras d'actionnement (16) actionne un raccord de guidage (11) ;
- le raccord de guidage (11) tourne autour d'un tourillon de raccord de guidage (13) ;
- le raccord de guidage (11) déplace l'arbre (9) de la poulie de tension (8) contre l'au moins une courroie (4) ;
- le bras d'actionnement (16) de l'actionneur (15) est déplacé dans une position extrême déterminée par un limiteur de courant communiquant avec l'actionneur (15), puisque la tension de courroie de l'au moins une courroie (4) par l'intermédiaire du raccord de guidage (11) fournit une résistance à un autre mouvement du bras d'actionnement (16).

10. Procédé selon la revendication 9, **caractérisé en ce que** le procédé comprend en outre au moins l'une des étapes suivantes :
- le raccord de guidage (11) agit sur un ressort (19) pour tourner, dans lequel le ressort (19) est fixé à la partie d'extrémité (18) d'un câble d'accélérateur (10) ;
- le ressort, qui est fixé à la partie d'extrémité (18) d'un câble d'accélérateur (10), est tourné dans une position dans laquelle les points de fixation du ressort (19) sont sensiblement alignés dans le prolongement de la partie d'extrémité (18) du câble d'accélérateur (10).
